# EUROPEAN PATENT APPLICATION

(11) **EP 2 998 366 A1**
(43) Date of publication of application: **23.03.2016**
(21) Application number: 15151285.2
(22) Date of filing: 15.01.2015
(51) Int. Cl.: C09D 1/00, C09D 5/10, C09D 7/12, B21D 22/02, C21D 8/00, C21D 9/46

(54) **High temperature oxidation-resistant coated steel plate and hot stamping method thereof**

(30) Priority: 16.09.2014 TW 103131986
(71) Applicant: China Steel Corporation, Kaohsiung 81233 (TW)
(72) Inventor: Hsieh, Sheau-Hwa, 81233 Hsiao Kang, Kaohsiung (TW); Wang, Shi-Wei, 81233 Hsiao Kang, Kaohsiung (TW); Hsu, Cheng-En, 81233 Hsiao Kang, Kaohsiung (TW); Kuo, Ching-Kuo, 81233 Hsiao Kang, Kaohsiung (TW); Lo, I-Hsuang, 81233 Hsiao Kang, Kaohsiung (TW)
(74) Representative: 2K Patentanwälte Blasberg Kewitz & Reichel

(57) **Abstract**

A high temperature oxidation-resistant coated steel plate includes a steel base material and a high temperature oxidation-resistant coating. The high temperature oxidation-resistant coating is formed by coating a high temperature oxidation-resistant paint onto the steel base material and baking in an oven. The high temperature oxidation-resistant paint includes a binder and a plurality of micron aluminum flakes. The binder has a three-dimensional molecular structure of Al-O. The micron aluminum flakes has a micron-sized thickness and a length ranging from 5 to 30 µm inclusive. The disclosure can enhance high temperature oxidation-resistant ability and hot stamping characteristics of the coated steel plate, and makes objects after hot stamping have good spot weldability and coating performance.

## Description

### FIELD

The disclosure relates to a steel plate and hot stamping method thereof, more particular to a high temperature oxidation-resistant coated steel plate and hot stamping method thereof.

### BACKGROUND

Hot stamping technologies in the automobile industry, due to advantages such as excellent formability, good dimensional stability, fewer forming steps and being capable of manufacturing automotive structural parts with a tensile strength more than 1470 MPa, have become major application technologies of manufacturing automotive metal plate parts at present. However, the temperature may usually exceed 900°C during hot stamping, causing serious high temperature rust scales on a surface of the steel plate, so that a workpiece must be sandblasted after formation, so as to remove the rust scales. In addition, the high temperature rust scales on the surface of the steel plate may also cause serious pollution and wear to hot stamping molds, which not only cause trouble to production operations but also increase production costs.

Although a conventional paint composed of aluminum powder, silicone resins and silanes has been proposed, upon actual tests, in addition to poor high temperature oxidation resistance of the coating, the steel plate to which the coating is applied, after hot stamping, may generate excessively thick alumina on its surface, so that the electric resistance is too high to be spot-welded, and thus the alumina should be removed through sandblasting. In response to the procedure of sandblasting removal, the paint must be added with an organic sacrificial component to protect the aluminum powder, so as to avoid oxidation. However, during heat treatment of the steel plate in the air, alumina and iron oxides may still exist on the surface of the steel plate, and the alumina and the iron oxides may cause high interface electric resistance, so that a great amount of heat during spot welding is generated, which easily causes expulsion. Meanwhile, in the case, the copper electrode cap is easy to react with steels and cause bonding between them., Also, because iron and aluminum oxides exist in the weld nugget, mechanical properties of it is deteriorate.

On the basis of the foregoing analysis, the conventional coating still has disadvantages of poor high temperature oxidation resistance and spot weldability. Therefore, it is necessary to provide a high temperature oxidation-resistant coated steel plate and hot stamping method thereof, so as to solve the foregoing deficiencies in the prior art.

### SUMMARY OF THE INVENTION

In accordance with one aspect of the present disclosure, a high temperature oxidation-resistant coated steel plate includes a steel base material and a high temperature oxidation-resistant coating. The high temperature oxidation-resistant coating is formed by coating a high temperature oxidation-resistant paint onto the steel base material and baking in an oven. The high temperature oxidation-resistant paint includes a binder and a plurality of micron aluminum flakes. The binder has a three-dimensional molecular structure of Al-O. The micron aluminum flakes has a micron-sized thickness and a length ranging from 5 to 30 µm inclusive.

In accordance with another aspect of the present disclosure, a hot stamping method of a high temperature oxidation-resistant coated steel plate includes steps in which a high temperature oxidation-resistant coated steel plate is provided. The method continues with step in which the high temperature oxidation-resistant coated steel plate is heated to an austenitizing state. The method continues with step in which the high temperature oxidation-resistant coated steel plate is transferred to a mold for hot stamping, to form an object.

In the present disclosure, a paint is formed with a binder and micron aluminum flakes and applied to a steel base material to form a high temperature oxidation-resistance coating. The coating enhances the high temperature oxidation-resistance and hot stamping characteristics of the coated steel plate, and makes objects after hot stamping have good spot weldability and coating performance.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a schematic structural view of a high temperature oxidation-resistant coated steel plate according to the present disclosure.
FIG. 2 is a flow diagram of a hot stamping method of a high temperature oxidation-resistant coated steel plate according to the present disclosure.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

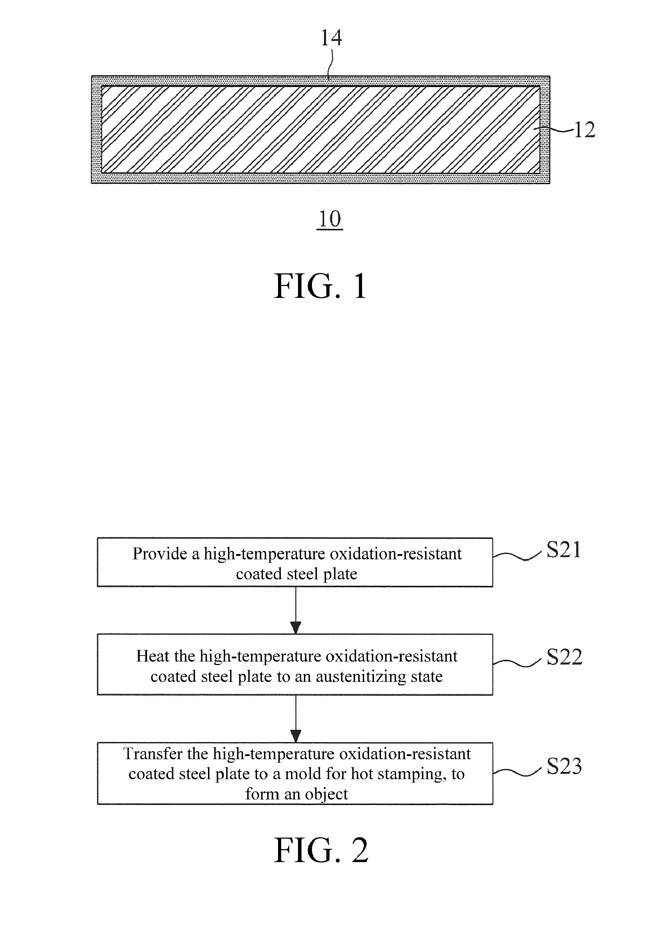

FIG. 1 is a schematic structural view of a high temperature oxidation-resistant coated steel plate according to the present disclosure.

Referring to FIG. 1, the high temperature oxidation-resistant coated steel plate 10 of the present disclosure includes a steel base material 12 and a high temperature oxidation-resistant coating 14. In some embodiments, the steel base material 12 is a manganese-boron steel base material.

The high temperature oxidation-resistant coating 14 is formed by coating a high temperature oxidation-resistant paint onto the steel base material 12 and baking in an oven. In some embodiments, the thickness of the high temperature oxidation-resistant coating 14 needs to be controlled between 2 and 10 µm inclusive, because high temperature oxidation resistance of the coating will be reduced when the thickness is less than 2 µm, and spot weldability of the steel plate will be worsened when the thickness is greater than 10 µm. In addition, in order to enhance adhesion of the high temperature oxidation-resistant coating 14, preferably, the baking temperature of the high temperature oxidation-resistant coating 14 should be controlled between 120 and 300°C inclusive, and the baking time should be controlled between 36 and 90 seconds inclusive. Besides, the coating method of the high temperature oxidation-resistant paint is selected from one of the following: spraying, roller coating and dip coating.

The high temperature oxidation-resistant paint includes a binder and a plurality of micron aluminum flakes. In some embodiments, the binder has a three-dimensional molecular structure of Al-O, and the binder is made with a sol-gel method. The micron aluminum flakes has a micron-sized thickness (about 0.5 to 1 µm thick) and a length ranging from 5 to 30 µm inclusive, and preferably, the weight of the micron aluminum flakes is 5-30% of the total weight of the paint.

In some embodiments, the high temperature oxidation-resistant coated steel plate 10 can adopt continuous steel coil production or discontinuous blank production. If the continuous steel coil production is adopted, the production process can be: unwinding→alkali washing→drying→roller coating or dip coating (two sides)→baking→coiling. If the discontinuous chip production is adopted, the production process can be: blanking→alkali washing→drying→spraying (one side)→baking→spraying (the other side)→baking→stacking and packing.

FIG. 2 is a flow diagram of a hot stamping method of a high temperature oxidation-resistant coated steel plate according to the present disclosure.

Referring to step S21 of FIG. 2 and FIG. 1, a high temperature oxidation-resistant coated steel plate 10 is provided. In the step, the high temperature oxidation-resistant coated steel plate 10 includes a steel base material 12 and a high temperature oxidation-resistant coating 14. The high temperature oxidation-resistant coating 14 is formed by coating a high temperature oxidation-resistant paint onto the steel base material 12 and baking in an oven. The high temperature oxidation-resistant paint includes a binder and a plurality of micron aluminum flakes. In some embodiments, the binder has a three-dimensional molecular structure of Al-O, and the micron aluminum flakes has a micron-sized thickness (about 0.5 to 1 µm thick) and a length ranging from 5 to 30 µm inclusive.

In addition, in the step, a tensile strength of the high temperature oxidation-resistant coated steel plate 10 is 500 to 600 MPa inclusive.

Referring to step S22 of FIG. 2 and FIG. 1, the high temperature oxidation-resistant coated steel plate 10 is heated to an austenitizing state. In the step, the heating temperature is 870 to 950°C inclusive, and the heating time is 3 to 5 minutes inclusive.

Referring to step S23 of FIG. 2 and FIG. 1, the high temperature oxidation-resistant coated steel plate 10 is transferred to a mold (not shown) for hot stamping, to form an object. The step includes: performing pressure holding and quenching treatment on the object at a cooling rate greater than 27°C/s, so as to make the object to have a uniform martensite organization, thereby obtaining a tensile strength greater than 1400 MPa.

In the present disclosure, the high temperature oxidation-resistant paint is composed of the binder and the micron aluminum flakes, and the high temperature oxidation-resistant paint is applied to a high temperature oxidation-resistant coating 14 formed on a steel base material 12, which can enhance the high temperature oxidation-resistance and hot stamping characteristics of the coated steel plate 10, and makes objects after hot stamping to have good spot weldability and coating performance.

The present disclosure is described in detail with the following embodiments, but this does not mean that the present disclosure is only limited to the content disclosed by the embodiments.

### [Embodiment 1]

A high temperature oxidation-resistant paint was prepared by mixing binder and aluminum flakes. The weight of micron aluminum flakes added to the paint was 30% of the total weight of the paint. The length of the micron aluminum flakes was 5 to 10 µm. An appropriate amount of dispersing agent was added to make the micron aluminum flakes mix uniformly and completely with binder to obtain a solid content of 50 to 60 wt%.

The paint was coated onto a manganese-boron steel base material through spraying. The thickness of the coating was 3±1 µm. After coating, the steel plate was baked in oven at 270°C for 48 seconds. The coated steel plate after baking was placed in an air oven of 930°C for 5 minutes, and then wass quickly transferred to a mold for hot-stamping forming.

The cross-cut test (ASTM D3359) is performed on the coated steel plate after baking, and the coating did not fall off at all after tape was removed. It represented good coating adhesion between steel plate and the coating. Similarly, the cross-cut test was performed on the object after hot stamping, and the coating did not fall off at all neither. In addition, a planar light source resistance measurement module (Surface Resistance Meter, Manufacturer/Model: Mitsubishi Chemical Analytech/Loresta-GP MCP-T610) was used to measure the surface electric resistance of the hot-stamping object with a four-point probe at a given current. The surface electric resistance of the object was measured to be less than 1×10⁻² Ω. Due to such low surface electric resistance, the spot welding test result showed no phenomenon of expulsion and no sign of spot welding electrode cap bonding with the hot-stamping object, indicating that its welding characteristics were identical with those of the bare steel. The hot-stamping object could also be coated by electro-deposition coating process. The tensile strength of the object after hot stamping reached 1500 MPa.

### [Embodiment 2]

A high temperature oxidation-resistant paint was prepared by mixing binder and aluminum flakes. The weight of micron aluminum flakes added to the paint was 15% of the total weight of the paint. The length of the micron aluminum flakes was 5 to 10 µm. An appropriate amount of dispersing agent was added to make the micron aluminum flakes mix uniformly and completely with binder to obtain a solid content of 40 to 50 wt%.

The paint was coated onto a manganese-boron steel base material through spraying. The thickness of the coating was 5±1 µm. After coating, the steel plate was baked in oven at 150°C for 36 seconds. The coated steel plate after baking was placed in an air oven of 890°C for 5 minutes, and then was quickly transferred to a mold for hot-stamping forming.

The cross-cut test (ASTM D3359) is performed on the coated steel plate after baking, and the coating did not fall off at all when the tape was removed. It represented good adhesion between steel plate and the coating. Similarly, the cross-cut test was performed on the object after hot stamping, and the coating did not fall off at all neither when the tape was removed. In addition, a planar light source resistance measurement module (Surface Resistance Meter, Manufacturer/Model: Mitsubishi Chemical Analytech/Loresta-GP MCP-T610) was used to measure the surface electric resistance of the hot-stamping object with a four-point probe at a given current. The surface electric resistance of the object was measured to be less than 1×10⁻² Ω. Due to such low surface electric resistance, the spot welding test result showed no phenomenon of expulsion and no sign of spot welding electrode cap bonding with the hot-stamping object, indicating that its welding characteristics were identical with those of the bare steel. The tensile strength of the object after hot stamping reached 1500 MPa.

### [Embodiment 3]

A high temperature oxidation-resistant paint was prepared by mixing binder and aluminum flakes. The weight of micron aluminum flakes added to the paint was 10% of the total weight of the paint. The length of the micron aluminum flakes was 5 to 10 µm. An appropriate amount of dispersing agent was added to make the micron aluminum flakes mix uniformly and completely with binder to obtain a solid content of 35 to 45 wt%.

The paint was coated onto a manganese-boron steel base material through spraying. The thickness of the coating was 9±1 µm. After coating, the steel plate was baked in oven at 300°C for 60 seconds. The coated steel plate after baking was placed in an air oven of 870°C for 5 minutes, and then was quickly transferred to a mold for hot-stamping forming.

The cross-cut test (ASTM D3359) is performed on the coated steel plate after baking, and the coating did not fall off at all after tape was removed. It represented good coating adhesion between steel plate and the coating. Similarly, the cross-cut test was performed on the object after hot stamping, and the coating did not fall off at all neither. In addition, a planar light source resistance measurement module (Surface Resistance Meter, Manufacturer/Model: Mitsubishi Chemical Analytech/Loresta-GP MCP-T610) was used to measure the surface electric resistance of the hot-stamping object with a four-point probe at a given current. The surface electric resistance of the object was measured to be less than 1×10⁻² Ω. Due to such low surface electric resistance, the spot welding test result showed no phenomenon of expulsion and no sign of spot welding electrode cap bonding with the hot-stamping object, indicating that its welding characteristics were identical with those of the bare steel. The hot-stamping object could also be coated by electro-deposition coating process. The tensile strength of the object after hot stamping reached 1480 MPa.

### [Embodiment 4]

A high temperature oxidation-resistant paint was prepared by mixing binder and aluminum flakes. The weight of micron aluminum flakes added to the paint was 20% of the total weight of the paint. The length of the micron aluminum flakes was 5 to 10 µm. An appropriate amount of dispersing agent was added to make the micron aluminum flakes mix uniformly and completely with binder to obtain a solid content of 45 to 55 wt%.

The cross-cut test (ASTM D3359) is performed on the coated steel plate after baking, and the coating falled off partially (about 5%) after tape was removed. It represented poor coating adhesion between steel plate and the coating. Similarly, the cross-cut test was performed on the object after hot stamping, and the coating did not fall off. In addition, a planar light source resistance measurement module (Surface Resistance Meter, Manufacturer/Model: Mitsubishi Chemical Analytech/Loresta-GP MCP-T610) was used to measure the surface electric resistance of the hot-stamping object with a four-point probe at a given current. The surface electric resistance of the object was measured to be 2×10⁻² Ω, which indicates that the surface electric resistance is high. Due to the high surface electric resistance, spot welding test result showed slight expulsion and spot welding electrode cap bonding with the hot-stamping object, indicating that its welding characteristics were worse then those of the bare steel. The hot-stamping object could be coated by electro-deposition coating process.

### [Embodiment 5]

A high temperature oxidation-resistant paint was prepared by mixing binder and aluminum flakes. The weight of micron aluminum flakes added to the paint was 5% of the total weight of the paint. The length of the micron aluminum flakes was 5 to 10 µm. An appropriate amount of dispersing agent was added to make the micron aluminum flakes mix uniformly and completely with binder to obtain a solid content of 25 to 35 wt%.

The paint was coated onto a manganese-boron steel base material through spraying. The thickness of the coating was 5±1 µm. After coating, the steel plate was baked in oven at 120°C for 90 seconds. The coated steel plate after baking was placed in an air oven of 870°C for 5 minutes, and then was quickly transferred to a mold for hot-stamping forming.

The cross-cut test (ASTM D3359) is performed on the coated steel plate after baking, and the coating falled off partially (about 5%) after tape was removed. It represented poor coating adhesion between steel plate and the coating. Similarly, the cross-cut test was performed on the object after hot stamping, and the coating did not fall off. In addition, a planar light source resistance measurement module (Surface Resistance Meter, Manufacturer/Model: Mitsubishi Chemical Analytech/Loresta-GP MCP-T610) was used to measure the surface electric resistance of the hot-stamping object with a four-point probe at a given current. The surface electric resistance of the object was measured to be 1×10⁻¹ Ω, which indicates that the surface electric resistance is high. Due to the high surface electric resistance, spot welding test result showed slight expulsion and spot welding electrode cap bonding with the hot-stamping object, indicating that its welding characteristics were worse then those of the bare steel. The reason for the high surface electric resistance was that the weight of the added micron aluminum flakes was excessively low. The hot-stamping object could be coated by electro-deposition coating process.

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the invention.

## Claims

1. A high temperature oxidation-resistant coated steel plate, comprising:
a steel base material; and
a high temperature oxidation-resistant coating formed by coating a high temperature oxidation-resistant paint onto the steel base material and baking in an oven, wherein the high temperature oxidation-resistant paint comprises a binder and a plurality of micron aluminum flakes, the binder has a three-dimensional molecular structure of Al-O, and the micron aluminum flakes has a micron-sized thickness and a length ranging from 5 to 30 µm inclusive.

2. The high temperature oxidation-resistant coated steel plate of Claim 1, wherein the steel base material is a manganese-boron steel base material.

3. The high temperature oxidation-resistant coated steel plate of Claim 1 or 2, wherein the thickness of the high temperature oxidation-resistant coating is between 2 and 10 µm inclusive.

4. The high temperature oxidation-resistant coated steel plate of any of the Claims 1 to 3, wherein the weight of the micron aluminum flakes is 5-30% of the total weight of the paint.

5. The high temperature oxidation-resistant coated steel plate of any of the Claims 1 to 4, wherein the binder is made with a sol-gel method.

6. The high temperature oxidation-resistant coated steel plate of any of the Claims 1 to 5, wherein the coating method of the high temperature oxidation-resistant paint is selected from one of the following: spraying, roller coating and dip coating.

7. The high temperature oxidation-resistant coated steel plate of any of the Claims 1 to 6, wherein the baking temperature of the high temperature oxidation-resistant coating is between 120 and 300°C inclusive.

8. The high temperature oxidation-resistant coated steel plate of any of the Claims 1 to 7, wherein the baking time of the high temperature oxidation-resistant coating is between 36 and 90 seconds inclusive.

9. A hot stamping method of the high temperature oxidation-resistant coated steel plate, comprising:
(a) providing the high temperature oxidation-resistant coated steel plate as claimed in Claim 1;
(b) heating the high temperature oxidation-resistant coated steel plate to an austenitizing state; and
(c) transferring the high temperature oxidation-resistant coated steel plate to a mold for hot stamping, to form an object.

10. The hot stamping method of Claim 9, wherein a tensile strength of the high temperature oxidation-resistant coated steel plate of the step (a) is 500 to 600 MPa inclusive.

11. The hot stamping method of Claim 9 or 10, wherein the heating temperature of the step (b) is 870 to 950°C inclusive.

12. The hot stamping method of any of the Claims 9 to 11, wherein the heating time of the step (b) is 3 to 5 minutes inclusive.

13. The hot stamping method of any of the Claims 9 to 12, wherein the step (c) further comprises performing pressure holding and quenching treatment on the object at a cooling rate greater than 27°C/s, so as to make the object to have a uniform martensite organization.

14. The hot stamping method of any of the Claims 9 to 13, wherein a tensile strength of the object is greater than 1400 MPa.
